# EUROPEAN PATENT APPLICATION

(11) **EP 2 722 910 A2**
(43) Date of publication of application: **23.04.2014**
(21) Application number: 12799832.6
(22) Date of filing: 08.06.2012
(51) Int. Cl.: H01M 2/16, H01M 10/02

(54) **APPARATUS FOR MANUFACTURING A FINE POROUS FILM FOR A SEPARATION FILM OF A BATTERY AND METHOD FOR MANUFACTURING A FILM USING SAME**

(30) Priority: 17.06.2011 KR 20110058991
(71) Applicant: E-Cell Tech. Inc, Seoul 135-880 (KR)
(72) Inventor: PARK, Hyun Chae, Seoul 138-890 (KR)
(74) Representative: Börjes-Pestalozza, Heinrich
(86) International application number: PCT/KR2012/004527
(87) International publication number: WO 2012/173357

(57) **Abstract**

The present invention relates to an apparatus and method for manufacturing a fine porous film to be used as a separation film of a secondary battery. The apparatus for manufacturing the fine porous film of the present invention includes: a T-shaped die (20) for molding a precursor film by extruding a molten resin generated by melting a partially crystalline resin through the front end of a nozzle; a guide roller (50) arranged at a downstream side of the extrusion direction of the T-shaped die (20) so as to move and guide the precursor film (F1) at a predetermined draft ratio; a precursor film cooling unit (40) for providing, in the moving direction of the precursor film, a flow of cooling air over either or both of the front and back surfaces of the precursor film so as to cool the precursor film; and a film stretching unit for applying a tensile force, in an axial direction or in biaxial directions, to the cooled film while same is passing through the precursor film cooling means (40).

## Description

### [Technical Field]

The present invention relates to an apparatus and method for manufacturing a fine porous film. More particularly, the present invention relates to a method for manufacturing a fine porous film which extrudes a semi-crystalline resin through a T-shaped extrusion die to mold a precursor film so that the precursor film is suitable for a fine porous separation film of a battery and stretches the precursor film while annealing.

### [Background Art]

In recent years, with the rapid growing use of electronic devices such as portable communication devices, portable laptop computers, and the like, secondary batteries used for batteries of the electronic devices are being required to have lightweight, high current density, and low self-discharge characteristics.

According to this trend, a fine porous film in which a plurality of fine holes are formed to secure good ion permeability between electrodes is being widely used as a separation film used in the secondary battery. The fine porous film for the separation film of the battery needs various characteristics that relate to battery characteristics, particularly, high strength and high porosity. Since the high strength characteristic of the separation film reduces internal short-circuit defects due to the thin film, it may be possible to manufacture ultra-thin batteries. And, the porosity of the separation film may improve the ion permeability to affect charge and discharge properties.

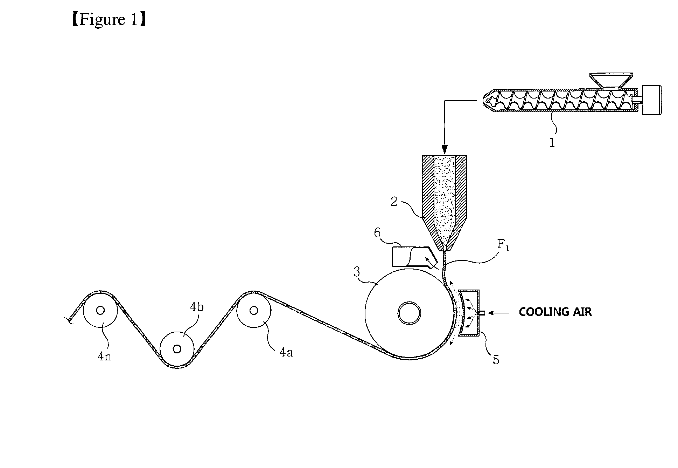

A method for manufacturing the fine porous film includes a dry process and a wet process. As shown in FIG. 1, in the method for manufacturing the film by using the wet process, a molten resin supplied from an extruder 1 is extruded through a "T"-shaped die (T-die) 2 to extrusion-mold a precursor film F1 and then to cool and solidify the precursor film F1 while the precursor film F1 contacts a casting roll (a cooling roll) 3 at a relatively low temperature of about 80□ to about 120□, thereby forming a lamellar crystal. Then, a series of stretching process including a low-temperature stretching process and a high-temperature stretching process is performed on the precursor film F1 to stretch the precursor film F1 to manufacture the fine porous film.

In case of the fine porous film manufactured by the conventional dry process, while the precursor film F1 manufactured by melting and extruding a semi-crystalline resin is cooled, a lamella crystal may be formed. Then, a relatively weak amorphous region existing between the lamella crystals formed in the precursor film F1 during the low-temperature stretching process is broken to form a pore, and the pore expands during the high-temperature stretching process to form a fine porous structure in the film.

A cooling rate of the melted and extruded precursor film may directly and decisively affect the generation of the lamella crystal structure in the precursor film. According to generally known principles, as the cooling rate of the precursor film increases, the formation of the lamella crystal may be promoted. However, if the cooling rate of the precursor film excessively increases, this may have an influence on secondary crystallization that is a lamella growth process. Thus, the cooling rate of the extrusion-molded precursor film has to be properly adjusted to secure suitable porosity according to use of the fine porous film.

However, according to the conventional method for manufacturing the precursor film, since the transferred precursor film is cooled while contacting the rotating cooling roll, it is difficult to uniformly cool the precursor film and adjust the cooling rate. As a result, there are technological limitations in improvement of porosity of the film because it is difficult to adjust the pore size and porosity of the fine porous film.

### [Disclosure]

### [Technical Problem]

Accordingly, to solve the above-described limitation in the conventional method of manufacturing the fine porous film, the present invention provides a method and apparatus for manufacturing a fine porous film, in which a method of cooling a precursor film is changed from a cooling roll contact method into a cooling method using a cooling gas to easily adjust a pore size and porosity of the film.

The present invention also provides an apparatus for manufacturing a fine porous film, which has a simple structure and relatively low manufacturing costs because attached equipment such as a cooling roll or a vacuum suction device are not provided.

### [Technical Solution]

An object of the present invention is to provide a method for manufacturing a fine porous film, the method including: extrusion-molding a molten material of a semi-crystalline resin through a T-shaped die to mold a precursor film; contacting a cooling gas having a temperature lower than a melting point of the semi-crystalline resin the precursor film to cool the precursor film; and stretching the cooled precursor film at a temperature lower than the melting point of the semi-crystalline resin in one axial direction or biaxial directions to form a fine pore in the precursor film.

The stretching of the cooled precursor film comprises annealing the precursor film at a temperature lower than a melting point the semi-crystalline resin, stretching the annealed precursor film at a temperature lower than the melting point of the semi-crystalline resin, stretching the low-temperature stretched film at a temperature that is relatively higher than that in the stretching of the annealed precursor film and lower than the melting point of the semi-crystalline resin, and thermally treating the high-temperature stretched film at a temperature lower than the melting point to thermally set the thermally treated film.

In the stretching of the precursor film, the low and high temperature stretching may include one axial stretching by using a plurality of rollers and biaxial stretching by using an extruder.

The cooling of the precursor film, the cooling air is introduced through an inflow hole spaced a predetermined distance from a front end of a nozzle of the T-shaped die along an extrusion direction to allow the introduced cooling air to flow from one surface of front/back surfaces of the precursor film along the extrusion direction of the precursor film, thereby contacting the precursor film to cool the precursor film.

The cooling air may be any kinds of air existing in an air state at room temperature, particularly, may be one selected from air, a nitrogen gas, and a helium gas and may be maintained in a range of a temperature of about 0□ to about 80□. In particular, the cooling gas may be filtered air and maintained at a temperature of about 20□ and about 40□.

Also, the cooling gas may flow at a rate of about 0.1 l/min. to about 100 l/min. within the cooling gas passage 43.

The semi-crystalline resin is one selected from the group consisting of polyolefin, polytetrafluoroethylene, polyacetal, polyester, polyamide, poly(4-methyl-1-buten), or a mixture or copolymer thereof.

Another object of the present invention is to provide an apparatus for manufacturing a fine porous film, the apparatus including: a T-shaped die through which a molten semi-crystalline resin is extruded from a front end of a nozzle to mole a precursor film; a precursor film cooling unit providing a flow of a cooling gas flowing in and extrusion direction of the precursor film to at least one surface of front and back surfaces of the precursor film to cool the precursor film by using the cooling gas; at least one guide roller disposed downstream in the extrusion direction of the T-shaped die to guide the precursor film so that the precursor film is tensioned at a predetermined draft ratio; and a film stretching unit stretching the cooled film obtained by being cooled through the cooling unit at a temperature lower than the melting point of the semi-crystalline resin in one axial direction or biaxial directions to form a fine pore in the film.

The stretching unit may include a low-temperature stretching unit, a high-temperature stretching unit, and a heat setting unit. The low-temperature stretching unit may stretch the film at a temperature lower than the melting point of the semi-crystalline resin. The high-temperature stretching unit may stretch the film stretched in the low-temperature stretching process at a temperature that is relatively higher than that in the low-temperature stretching process and lower than the melting point of the semi-crystalline resin of the film. The heat setting unit may thermally treat the film stretched in the high-temperature stretching process at a temperature lower than the melting point to thermally set the film.

The stretching unit may include a plurality of stretching rollers (not shown) that movably supports the film and applies tensile force to the supported film in the one axial direction (a longitudinal direction of the film) by a difference in rotation rate or a general biaxial stretching machine stretching the film in a biaxial direction (a longitudinal or transverse direction of the film).The precursor film cooling unit may include a cooling gas passage through which the cooling gas flows along the extrusion direction of the precursor film and an inflow hole disposed in a predetermined space apart from a front end of a nozzle of the T-shaped die to introduce the cooling gas into the cooling gas passage.

The apparatus for manufacturing the fine porous film may further include an air-conditioner for filtering impurities from the cooling gas introduced into the cooling gas passage and adjusting a temperature of the cooling gas. The cooling gas is air and maintained at a temperature of about 20 °C and about 40 °C.

### [Advantageous Effects]

According to the embodiment of the present invention, since the cooling gas may contact the precursor film to cool and solidify the precursor film, the apparatus for manufacturing the fine porous film may have the simple structure and relatively low manufacturing costs because the attached equipment such as the cooling roll or the vacuum suction device are not provided.

According to the embodiment of the present invention, the cooling rate of the precursor film may be simply adjusted by controlling the temperature and flow rate of the cooling gas, and thus the porosity or pore size of the film may be easily adjusted to stably manufacture a high-quality fine porous film having uniform porosity.

### [Description of Drawings]

FIG. 1 is a schematic view of an apparatus for manufacturing a fine porous film according to a related art.
FIG. 2 is a schematic view of an apparatus for manufacturing a fine porous film according to the present invention.

### [Mode for Invention]

Hereinafter, the exemplary embodiments of the present invention will be described in detail with reference to the accompanying drawings.

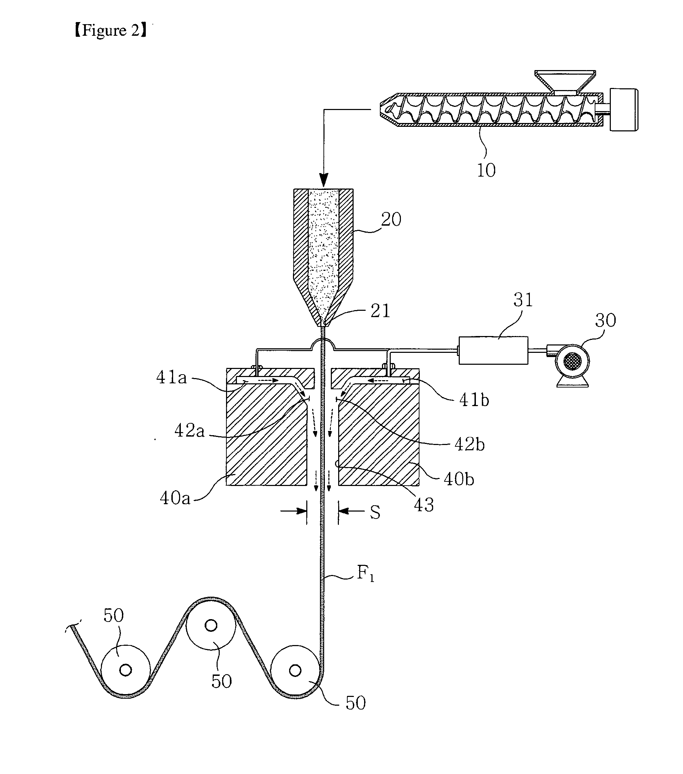

Referring to FIG. 2, an apparatus for manufacturing a fine porous film according to the present invention includes a T-shaped die 20 in which a semi-crystalline resin melted in an extruder 10 is extruded at a constant pressure through a front end 21 of a nozzle to mold a precursor film F1; a guide roller 50 disposed downstream in an extrusion direction of the T-shaped die to guide the extruded precursor film so that the precursor film is tensioned at a predetermined draft ratio; a precursor film cooling unit 40 disposed on one side or both side surfaces of front/back surfaces of the precursor film to provide a flow of cooling gas in a transfer direction of the precursor film F1, thereby to cool the precursor film; and a film stretching unit stretching the cooled film at a temperature lower than a melting point of the semi-crystalline resin to form a fine pore in the film.

The semi-crystalline resin used in the manufacturing of the fine porous film according to the present invention may be one resin selected from the group consisting of polyolefin, polytetrafluoroethylene, polyacetal, polyester, polyamide, poly (4-methyl-1-buten), or a mixture or copolymer thereof.

The molten semi-crystalline resin may be extruded through the T-shaped die 20 to mold the precursor film F1 in which a pore is not formed. Then, the precursor film F1 may be cooled by using a cooling gas supplied through the precursor film cooling unit 40 while the precursor film F1 passes through the precursor film cooling unit 40 disposed under the front end of the nozzle of the T-shaped die.

The cooling gas used for cooling the precursor film may be one selected from air, a nitrogen gas, and a helium gas and may be maintained in a range of a temperature of about 0□ to about 80□. The present invention is not limited to the above-described gases used as the cooling gas, and thus any gas existing in a gas state at room temperature may be available. However, the cooling gas may be air. The air may be generated from a blower 30, and impurities within the air may be filtered by an air-conditioner 31 and adjusted at a temperature of about 20□ and about 40□, and then may be supplied into the film cooling unit 40.

For convenience of explanation in this specification, a right surface of the precursor film F1 in FIG. 2 is called a "front surface", a left surface of the precursor film F1 in FIG. 2 is called a "back surface" in the entire description.

In the precursor film cooling unit 40, blocks 40a and 40b are respectively disposed on the front and back surfaces of the precursor film F1 so that inner surfaces of the blocks 40a and 40b are spaced a predetermined distance S from each other to form a cooling gas passage 43 therebetween. The blocks 40a and 40b have cooling gas guide passages 41 a and 42b for guiding the cooling gas supplied from the air-conditioner 31 to the cooling gas passage 43, respectively. Also, inflow holes 42a and 42b for introducing the cooling gas within the guide passages 41a and 41b into the cooling gas passage 43 in a film transfer direction are provided in front ends of the guide passages 41a and 41b, respectively.

Each of the inflow holes 42a and 42b is disposed spaced a distance of about 5mm to about 200mm, preferably, about 2mm to about 60mm from the front end 21 of the nozzle of the T-shaped die. Since the installation position of each of the inflow holes 42a and 42b determines a cooling starting point of the precursor film, the installation position may be an important factor on the crystal formation for forming the pore in the film.

When the cooling gas is supplied into the cooling gas guide passages of the precursor film cooling unit 40, the cooling gas may be introduced to the cooling gas passage 43 through the inflow holes 42a and 42b to contact and cool the precursor film while flowing along the transfer direction of the precursor film. Here, the cooling gas may cool the precursor film to promote the formation of lamella crystals in the precursor film.

Here, the cooling gas may flow at a rate of about 0.1 l/min. to about 1001/min. within the cooling gas passage 43.

The guide roller 50 disposed under the cooling unit 40 may support a lower end of the precursor film to hold the film so that the precursor film is not shaken while passing through the cooling gas passage 43 of the film cooling unit 40. Also, the guide roller 50 may control a rotating rate of a rotation motor (not shown) which rotates the guide roller 50 to control the rotating rate of the guide roller 50, thereby guiding the extruded precursor film F1 so that the film F1 is tensioned at a predetermined draft ratio. Therefore, the guide roller 50 may be disposed downstream in the extrusion direction (a vertical direction) of the precursor film.

The apparatus for manufacturing the film according to the present invention includes a stretching unit which stretches the film cooled while passing through the cooling unit 40 at a temperature lower than the melting point of the semi-crystalline resin in one axial direction or biaxial directions to form the fine pore in the film.

The stretching unit may include a low-temperature stretching unit, a high-temperature stretching unit, and a heat setting unit. The low-temperature stretching unit may stretch the film at a temperature lower than the melting point of the semi-crystalline resin. The high-temperature stretching unit may stretch the film stretched in the low-temperature stretching process at a temperature that is relatively higher than that in the low-temperature stretching process and lower than the melting point of the semi-crystalline resin of the film. The heat setting unit may thermally treat the film stretched in the high-temperature stretching process at a temperature lower than the melting point to thermally set the film.

The stretching unit may include a plurality of stretching rollers (not shown) that movably supports the film and applies tensile force to the supported film in the one axial direction (a longitudinal direction of the film) by a difference in rotation rate or a general biaxial stretching machine stretching the film in a biaxial direction (a longitudinal or transverse direction of the film).

A process for manufacturing the fine porous film by using the apparatus for manufacturing the fine porous film is described as follows.

### 1) Precursor film extrusion-molding process;

A molten material in which a semi-crystalline resin is melted is extrusion-molded while passing through a T-shaped die 20 to mold a precursor film.

The precursor film F1 may be disposed downstream in an extrusion direction (a vertical direction) and wound and supported around an outer circumferential surface of a rotating guide roller 50. The guide roller 50 may be rotated at a predetermined rate to tension the film at a predetermined draft ratio, thereby to guide the tensioned film. Here, when the guide roller 50 is changed in rotating rate, the extrusion draft ratio of the film may be adjusted.

### 2) Cooling process of precursor film

The precursor film may contact a cooling gas while passing through a cooling gas passage 43 of a cooling unit 40 to cool the film.

The cooling gas used in the film cooling process may be any gas existing in a gas state at room temperature, preferably, may be any one of air, a nitrogen gas, and a helium gas. Here, the gas may be maintained at a temperature of about 0□ and about 80□. In particular, the cooling gas may be filtered air and maintained at a temperature of about 200 and about 400. Also, the cooling gas may flow at a flow rate of about 0.1 l/min. to about 100 l/min. in the cooling gas passage in the film cooling process.

### 3) Stretching process of film

A series of stretching processes may be performed on the film cooled by contacting the cooling gas to uniformly form fine pores.

The stretching process includes an annealing process in which the film cooled in the cooling process is annealed at a temperature lower than a melting point of the semi-crystalline resin, a low-temperature stretching process in which the annealed precursor film is stretched at a temperature lower than the melting point of the semi-crystalline resin, a high-temperature stretching process in which the film stretched in the low-temperature stretching process is stretched at a temperature that is relatively higher than that in the low-temperature stretching process and lower than the melting point of the semi-crystalline resin of the film, and a heat setting process in which the film stretched in the high-temperature stretching process is thermally treated at a temperature lower than the melting point to thermally set the film.

In the low-temperature stretching process, an amorphous region between lamella crystals formed in the film may be broken due to the tensile force exerted in a longitudinal or transverse direction of the film to form a pore.

In the high-temperature stretching process, the pore formed in the film in the low-temperature stretching process may be expanded through the high-temperature stretching process to form a porous pore.

Although the fine porous film is extrusion-molded through the T-shaped die in a direct downward direction as described above, the present invention may also be applied to a case in which the film is extrusion-mold in a direct upward direction.

In the method for manufacturing the fine porous film according to the present invention, the cooling rate of the precursor film may be adjusted by only controlling the temperature and flow rate of the cooling gas. Thus, the porosity or the pore size of the film may be easily adjusted, and also the porosity of the film may be uniform to stably manufacture the high-quality fine porous film.

## Claims

1. A method for manufacturing a fine porous film, the method comprising:
extrusion-molding a molten material of a semi-crystalline resin through a T-shaped die to mold a precursor film;
contacting a cooling gas having a temperature lower than a melting point of the semi-crystalline resin the precursor film to cool the precursor film; and
stretching the cooled precursor film at a temperature lower than the melting point of the semi-crystalline resin in one axial direction or biaxial directions to form a fine pore in the precursor film.

2. The method of claim 1, wherein the cooling of the precursor film comprises providing a flow of the cooling gas flowing in an extrusion direction of the precursor film to at least one surface of front and back surfaces of the precursor film to allow the cooling air to contact the precursor film, thereby cooling the precursor film.

3. The method of claim 1, wherein the cooling gas is one selected from air, a nitrogen gas, and a helium gas and is maintained at a temperature of about 0°C and about 80°C.

4. The method of claim 3, wherein the cooling gas is air and maintained at a temperature of about 20°C and about 40°C.

5. The method of claim 1, wherein the semi-crystalline resin is one selected from the group consisting of polyolefin, polytetrafluoroethylene, polyacetal, polyester, polyamide, poly(4-methyl-1-buten), or a mixture or copolymer thereof.

6. The method of claim 1, wherein the stretching of the cooled precursor film comprises annealing the precursor film at a temperature lower than a melting point the semi-crystalline resin, stretching the annealed precursor film at a temperature lower than the melting point of the semi-crystalline resin, stretching the low-temperature stretched film at a temperature that is relatively higher than that in the stretching of the annealed precursor film and lower than the melting point of the semi-crystalline resin, and thermally treating the high-temperature stretched film at a temperature lower than the melting point to thermally set the thermally-treated film.

7. A separation film for a secondary battery comprising the fine porous film manufactured according to any one of claims 1 to 6.

8. An apparatus for manufacturing a fine porous film, the apparatus comprising:
a T-shaped die through which a molten semi-crystalline resin is extruded from a front end of a nozzle to mole a precursor film;
a precursor film cooling unit providing a flow of a cooling gas flowing in and extrusion direction of the precursor film to at least one surface of front and back surfaces of the precursor film to cool the precursor film by using the cooling gas;
at least one guide roller disposed downstream in the extrusion direction of the T-shaped die to guide the precursor film so that the precursor film is tensioned at a predetermined draft ratio; and
a film stretching unit stretching the cooled film obtained by being cooled through the cooling unit at a temperature lower than the melting point of the semi-crystalline resin in one axial direction or biaxial directions to form a fine pore in the film.

9. The apparatus of claim 8, wherein the precursor film cooling unit comprises a cooling gas passage providing a flow of the cooling gas flowing along the extrusion direction of the precursor film and an inflow hole formed spaced a predetermined distance from a front end of a nozzle of the T-shaped die to introduce the cooling gas into the cooling gas passage.

10. The apparatus of claim 8, wherein the cooling gas is air and further comprises an air-conditioner for filtering impurities from the cooling gas introduced into the cooling gas passage and adjusting a temperature of the cooling gas.
